# EUROPEAN PATENT SPECIFICATION

(11) **EP 0 747 807 B1**
(45) Date of publication and mention of the grant of the patent: **06.03.2002**
(21) Application number: 96302536.6
(22) Date of filing: 11.04.1996
(51) Int. Cl.: G06F 3/16

(54) **Moving an element shown on a computer display**
Bewegung eines auf dem Bildschirm gezeigten Zeigers
Déplacement d'un élément montré sur un écran d'ordinateur

(30) Priority: 11.04.1995 US 420245
(43) Date of publication of application: 11.12.1996
(73) Proprietor: DRAGON SYSTEMS INC., Newton, MA 01260 (US)
(72) Inventor: Pugliese, Patri J., Medford, MA 02155 (US); Gould, Joel M., Winchester, MA 01890 (US)
(74) Representative: Deans, Michael John Percy

(56) References cited:
- EP-A- 0 294 657
- EP-A- 0 604 340

## Description

This invention relates to moving an element shown on a computer display. We describe in detail below voice controlled cursor movement.

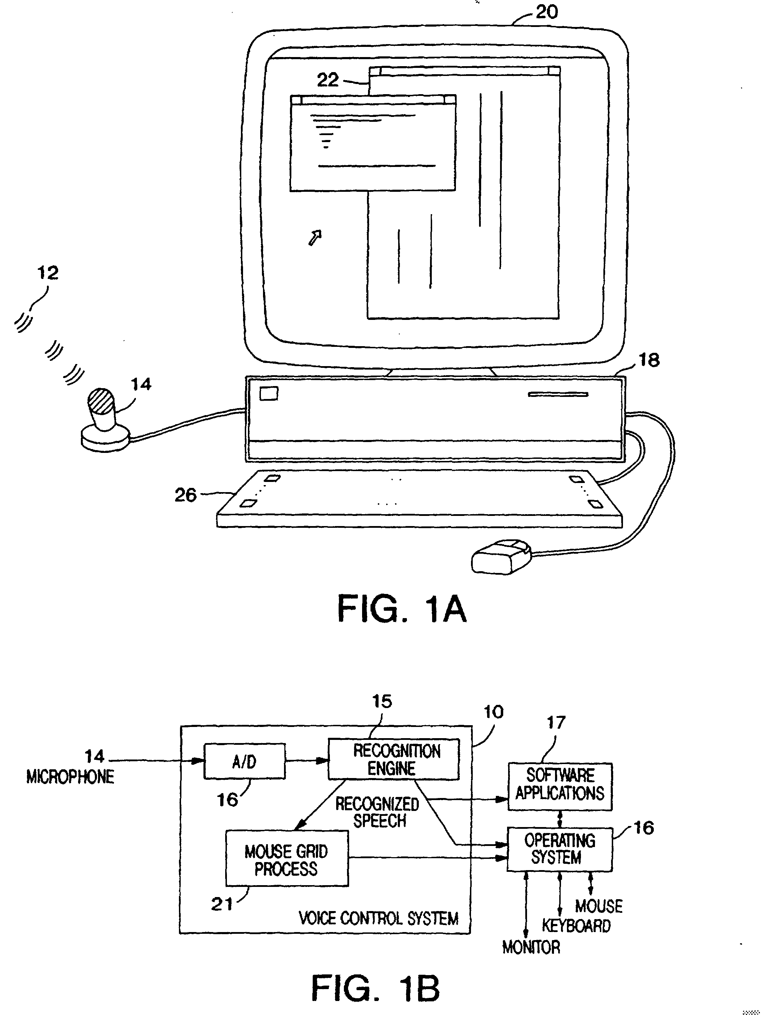

As seen in Figs. 1A and 1B, in a graphical user interface, elements (e.g., windows, buttons, menus) displayed on a monitor 20 of a computer 18 are typically controlled using a mouse 24 and a keyboard 26. The interface elements may also be controlled by a user's spoken commands 12 which are picked up by a microphone 14 and fed through a voice control system 10. After being digitized in an A/D converter 16 in the voice control system, the user's command is "recognized" by a recognition engine 15 (in the form of software running in computer 18). The recognized speech is provided to software applications 17 and the operating system 19 also running on the computer, and corresponding actions are taken. For example, if the voiced command is "button click", the operating system executes the button click at the current location of the cursor, just as if the mouse button had been physically clicked. An example of a voice recognition engine used to control a graphical user interface is the one included in DragonDictate, available from Dragon Systems of Newton, MA.

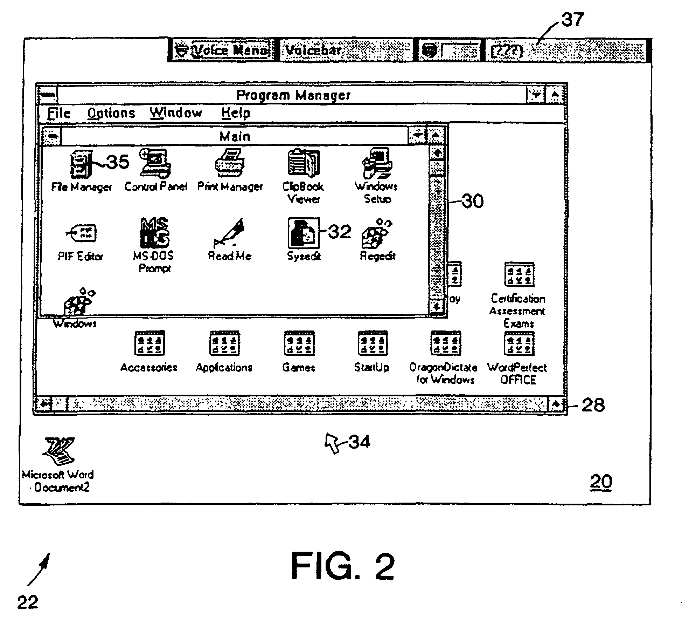

As seen in Fig. 2, the graphical user interface may include windows 28, 30 and icons 32 representing files or programs. Windows 28, 30 may be resized, moved, opened, or closed by the user. The windows may overlap to allow viewing of a currently active window 37 and an inactive window 20 and 28.

The cursor 34 (in this case in the form of an arrow) is moved around by the user to indicate locations of interest. For example, if the user wants to launch the SYSEDIT program she moves the cursor to point to the SYSEDIT icon and double clicks the mouse. Also, the user may "drag" the cursor by positioning it at one location, holding down the mouse button, then moving the cursor to another location and releasing the button. This would allow the user to, for example, move the SYSEDIT icon to a new location within window 30.

To make voice control of a graphical user interface effective, the user should be able to move the cursor around the screen and perform dragging operations using voiced commands. One way to do this would be to use commands such as "up", "down", "faster", "slower" to cause corresponding motion of the cursor, but this would not be satisfactory since it would not allow rapid relocation and dragging of a cursor using voiced commands.

EP-A-294657 relates to a system in which a user identifies a portion of a display, and in response that portion of the display is enlarged. This process can be repeated to "zoom-in" on a desired region.

According to the present invention, an element shown on a computer display is moved toward a target position by:
(a) displaying a first visual element that defines subregions of the display;
(b) recognising a user's input identifying a subregion of the display in which the target position is located;
(c) moving the element discontinuously to a location within the identified subregion without changing a position on the display at which the identified subregion is displayed, and displaying a second visual element that defines sub-subregions of the identified subregion;
(d) recognising a next user's input identifying a sub-subregion of the subregion of the display in which the target position is located; and,
(e) moving the element discontinuously to a location within the identified sub-subregion without changing a position on the display at which the identified sub-subregion is displayed.

Implementations of the invention may include one or more of the following features. The subregion (the sub-subregion) may be one of a grid of nine possible rectangular subregions (sub-subregions) which can be displayed to and identified by the user. The grid may be overlaid on other displayed features. The grid may be formed of windows. The grid may not be displayed when the subgrid is being displayed. The process may be iterated until the user indicates that the method should be ended. The grid may span the entire display, or only a selected portion of the display, e.g. a window. Each subregion (sub-subregion) may have an associated index which is displayed to the user. The user's inputs may be entered as voice commands which include numbers used to indicate the subregion and the sub-subregion. The subregions may be marked with arbitrary labels and the user may designate a subregion by saying one of the labels. The labels may include letters of the alphabet and could be, for example: ABC/DEF/GHI or [top left, top, top-right/left, centre, right/bottom-left, bottom, bottom-right]. The user may also specify a distance for moving the element. The element may be moved to the centre of the identified subregion. The system may recognise a user's input indicating that the previous step should be undone.

The invention may permit dragging an element (e.g. any graphical element such as a cursor, an arrow, an icon, or a window) between two locations on a computer display. In the method, user commands are accepted which indicate the two locations. Then the element is dragged between them. The user commands which indicate at least one of the locations identify a sequence of discontinuous jumps for moving the element to the indicated location.

Other advantages and features will become apparent from the following description.

In the drawings:

Figure 1A is a front view of a personal computer.

Figure 1B is a block diagram of a voice control system.

Figures 2 to 19 are views of screen displays including a mouse grid.

Figure 20 is a flow diagram.

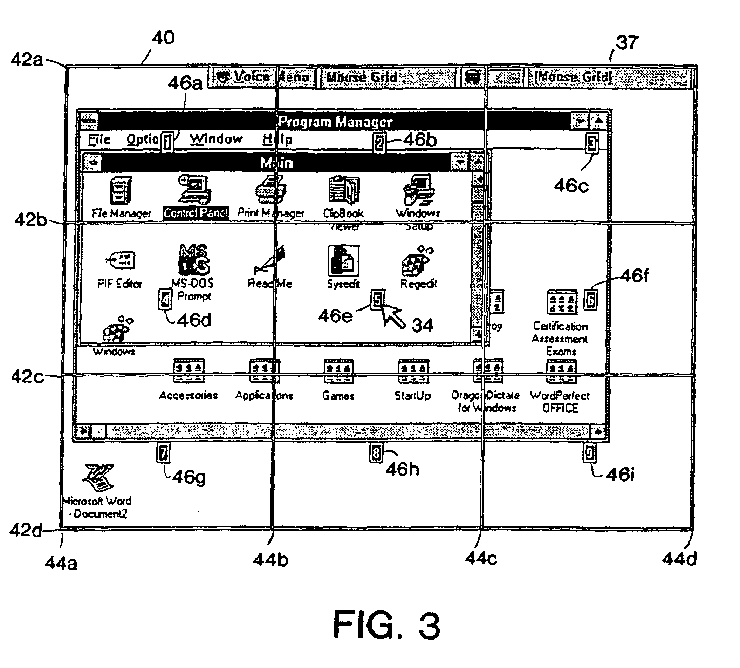

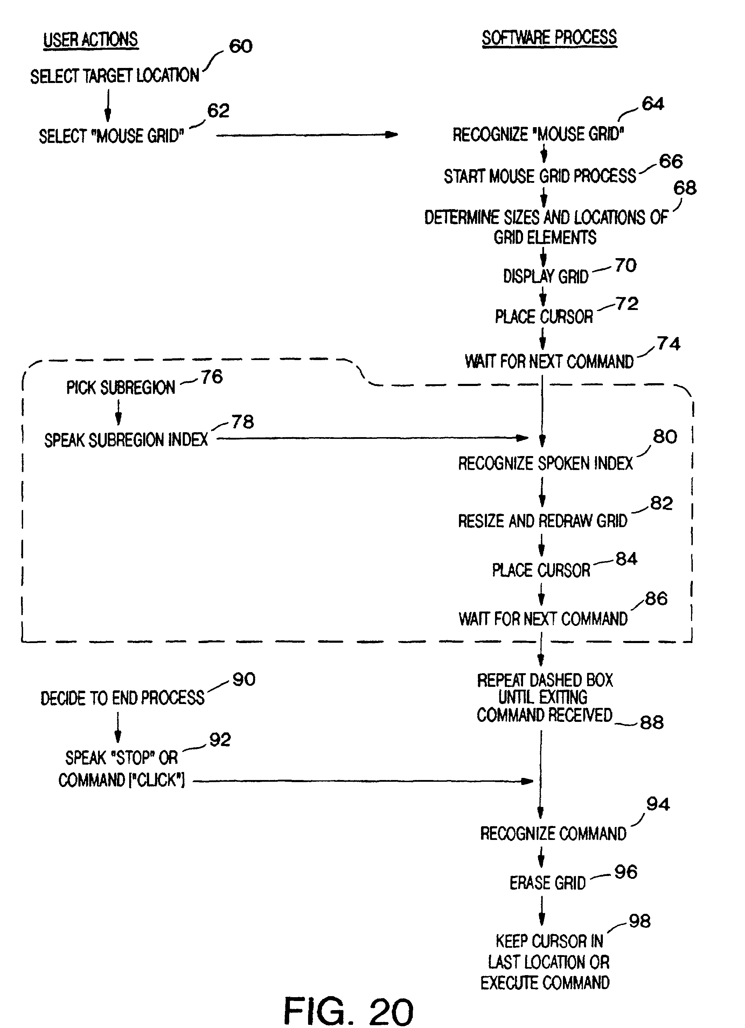

Voice control of cursor motion and dragging may be done by a "divide-and-conquer" strategy as shown in the sequence of Figs. 3 through 9 and the flow diagram of Fig. 20. Instead of moving the cursor along a continuous path toward the target location, the cursor is quickly jumped discontinuously through a sequence of discrete positions that home in from its original location to the target location.

The user specifies the discrete positions along the sequence with the aid of a displayed mouse grid 40. The mouse grid 40 subdivides the screen or a portion of the screen into, e.g., nine equal-size subregions. The user indicates the next position for the cursor in the sequence of positions by voicing a command that identifies the subregion which contains the target location. The grid is then immediately scaled down to cover approximately in the identified subregion and the cursor is relocated to the center of that region. The process is repeated (with some modifications mentioned below) until the target (or a position sufficiently close to it) is reached. Nine was chosen as the number of subregions because a number which is the square of an odd integer allows the cursor to be initially placed in the center of the screen, which is comfortable to the user, and the next available number which is the square of an odd integer is twenty-five, which would be a cumbersome number of subregions.

For example, a user interacting with the screen in Fig. 2 may wish to move the cursor from the position shown to a target position 35 on the File Manager icon (step 60 of Fig. 20). The user first speaks the command "mouse grid", which is recognized by the voice control system. This starts the mouse grid process as seen in steps 62 ... 66. A small interface window 37 for the voice control system is continually displayed at the upper right hand corner of the screen 20 to inform the user of the state of the voice control system.

As seen in Fig. 3, as soon as the system recognises the command, it displays a grid formed of a group of seventeen elements: four evenly spaced thin horizontal windows 42a .... 42d; four evenly spaced thin vertical windows 44a .... 44d; and nine small windows 46a .... 46i, each centred in and bearing an index for the subregion which it occupies. The system also automatically places the cursor at the centre of the centre subregion (subregion 5), and then waits for the user's next voice command (steps 68 .... 74).

The seventeen elements which form the grid are all defined to be "on top" of other windows so that the grid always remains visible. Also, because the windows making up the grid are thin or small, they permit the user to see the windows and other elements that lie "below" them.

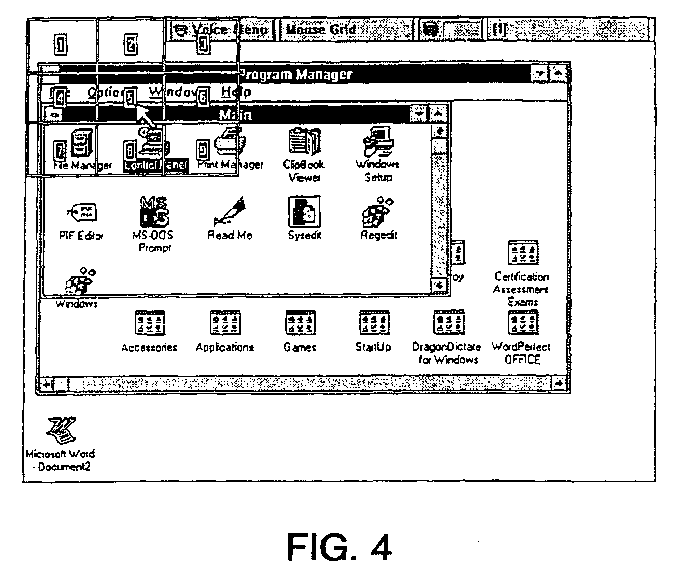

While the grid of Fig. 3 is being displayed, the user speaks "one", the index of the subregion which contains the target location. The system responds, as shown in Fig. 4, by displaying the recognised command [1] in the voice control system window; resizing and relocating the 17 windows of the grid so that the grid essentially occupies the subregion that the user identified by the voiced command; and moving the cursor to the centre of the resized and relocated grid to wait for the user's next voice command (steps 76 .... 86). In the resized grid shown in Fig. 4, the right hand thin vertical window and the bottom thin horizontal window are relocated a few pixels to the right and beneath, respectively, the original subregion 1 of Fig. 3. This ensures that a target location which is under window 44b or window 42b (in Fig. 3) will be exposed to view in Fig. 4.

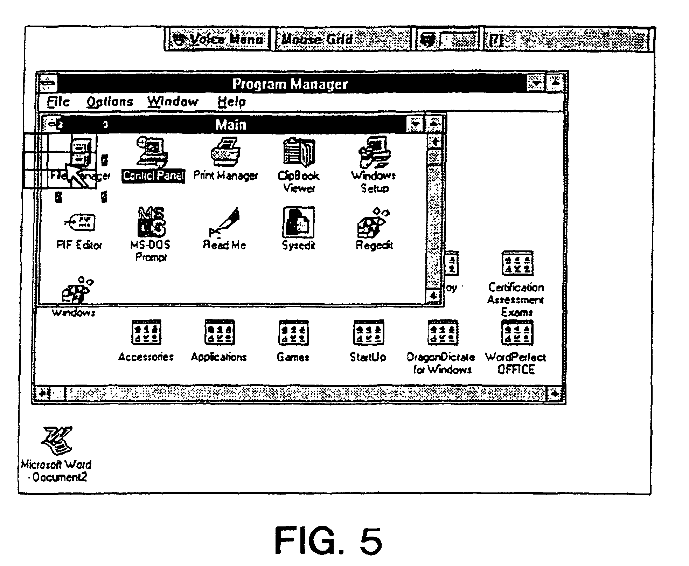

The process is repeated when the user speaks "seven" to indicate the subregion where the file manager icon is displayed. As shown in Fig. 5 (step 88), the grid is again resized and relocated in a similar manner and the cursor is relocated to the center of the center subregion of the new grid. Unlike the larger grids, however, the subregion indices are now shown outside the grid to permit the user to see what is within the grid. The label for the center subregion is omitted, as are any labels that would be outside the border of the screen 20.

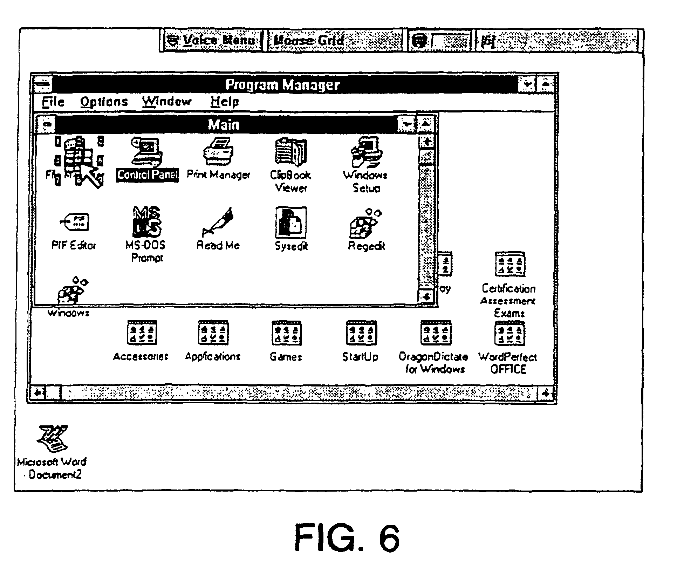

After the user speaks "six", the grid is again redrawn, this time as shown in Fig. 6. The cursor is now positioned to permit the file manager program to be invoked. This could be done by the user speaking an execution command such as "button double click". Thus, by speaking the simple sequence "mouse grid", "1", "7", "6", the user moved the cursor to the target location quickly.

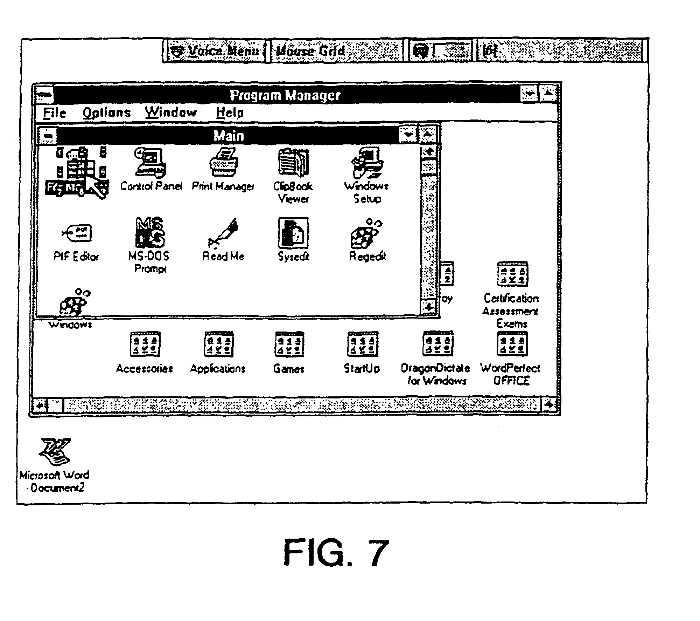

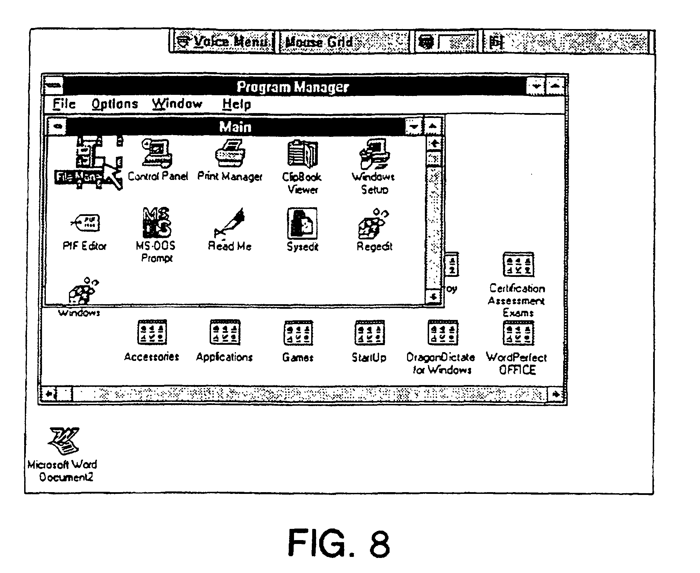

If desired, the cursor location may be controlled even more finely. Beginning in Fig. 7, if the user speaks "six", the grid is reconfigured, as shown in Fig. 8. If the entire smaller grid were redrawn, much of the image within the grid would be obscured by the grid elements. Instead, subregion 6 from the prior screen is redrawn as a single box but without the further subdivisions within the box being shown. By again speaking "six" the user can cause the system to display a smaller box which is representative of, though larger than, the undisplayed subregion 6 within the box shown on Fig. 8.

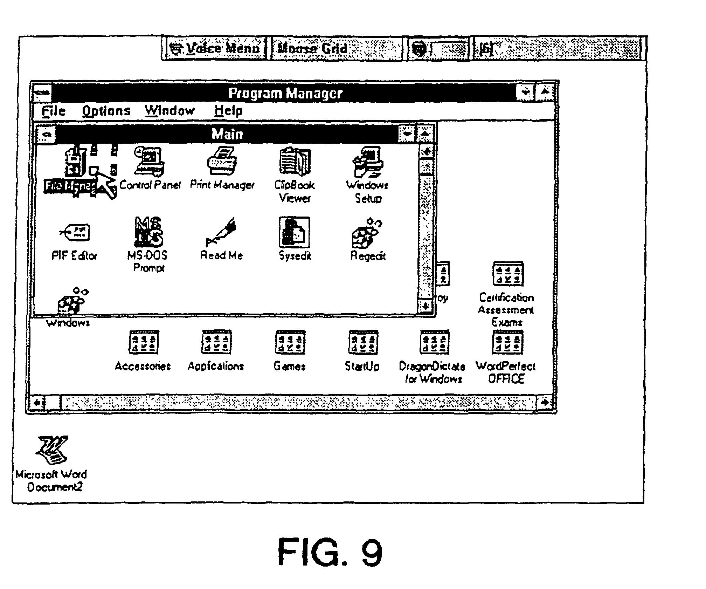

The process is repeated (Fig. 9) until the cursor reaches the target location. When the grid becomes too small to conveniently undergo further shrinking, it continues to be displayed without further shrinking as a reminder to the user that the system is in mouse grid mode. Spoken voice commands then move the cursor a set number of pixels in the indicated direction, such as three pixels up, down, left or right, e.g. if the user said "six" the cursor would move three pixels to the right.

When the cursor is at the target location, the user may speak a command to remove the mouse grid 40, e.g. "stop", or to take any other action that is permissible, e.g. a mouse click, (steps 90 .... 98). Or the user may take the action directly by a keystroke or by actually clicking the mouse button.

As an additional feature, the user may reverse the steps that caused resizing of the grid, for example, to correct a mistake in the sequence. The spoken command to achieve this could be the word "undo". For example, if the user speaks "undo" while viewing Fig. 6, the grid would return to its state shown in Fig. 5. Multiple "undo" steps could be permitted.

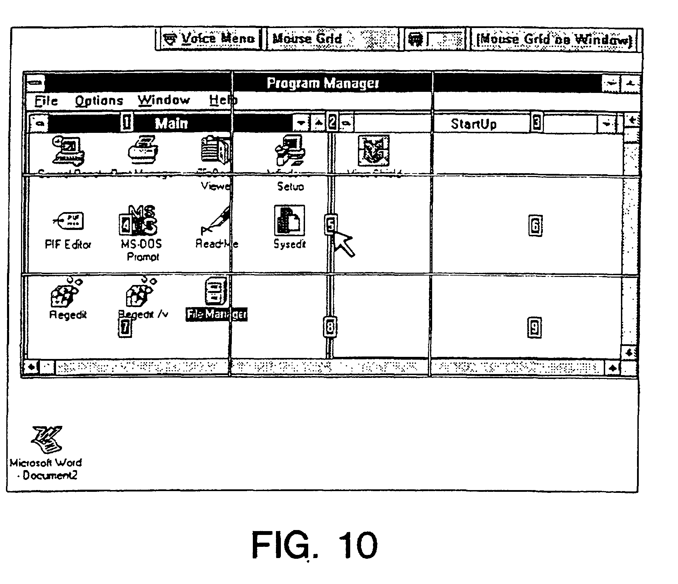

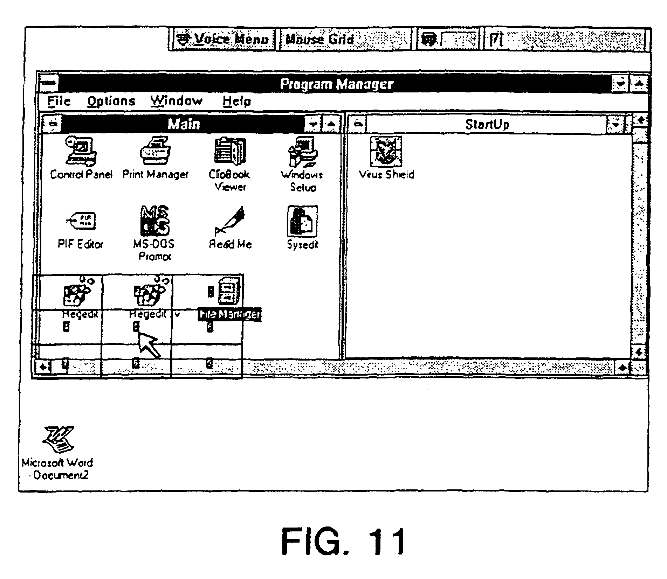

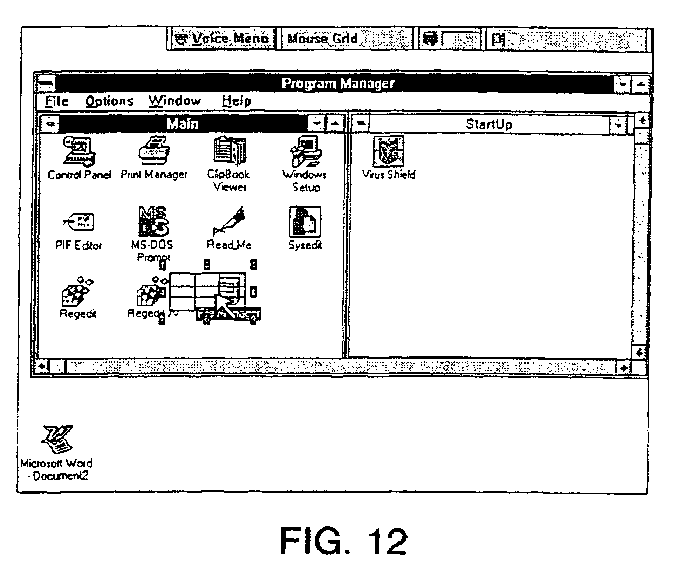

Instead of applying the grid to the full screen, it may be applied to only a selected (e.g. the active) window, by speaking the phrase "mouse grid on window", as seen in Fig. 10. Subsequent grids, as shown in Figs. 11, 12 and 13 will be redrawn within subregions within the window.

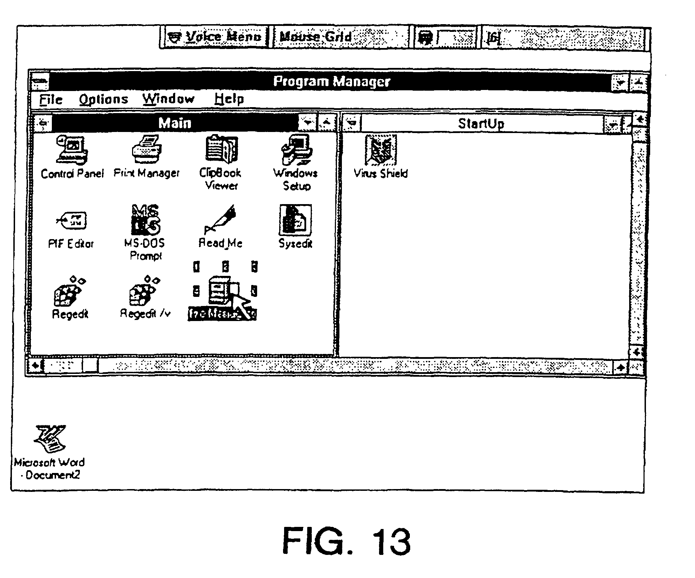

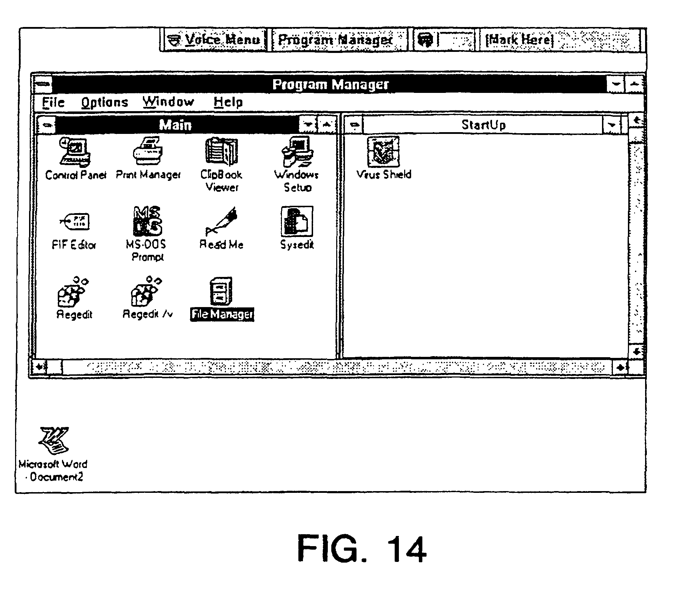

The cursor movement procedure may also form the basis for dragging the cursor. First the user applies the Mouse Grid function to move the cursor to the object to be dragged (e.g. the File Manager icon in Fig. 13). Next the user would speak a phrase such as "mark here", as shown in Fig. 14, to indicate that the place from which the dragging is to occur is the present cursor location. (Or the user could use the mouse to move the cursor to the location that is to be the subject of the "mark here" command.) The file manager title is then highlighted to confirm the action to the user. Although it would be possible for the "mark here" command to actually execute a button click to select the file manager, in one implementation that is not done and the button click must be commanded separately. However the mouse grid would vanish after the "mark here" command.

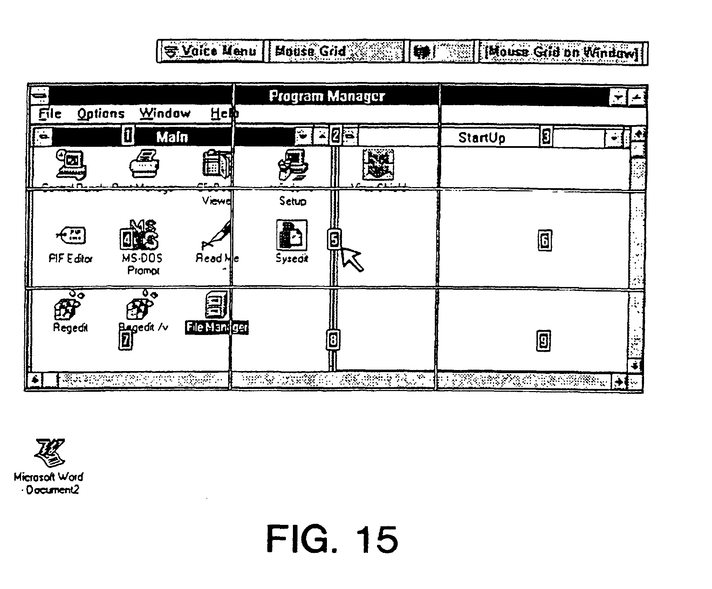

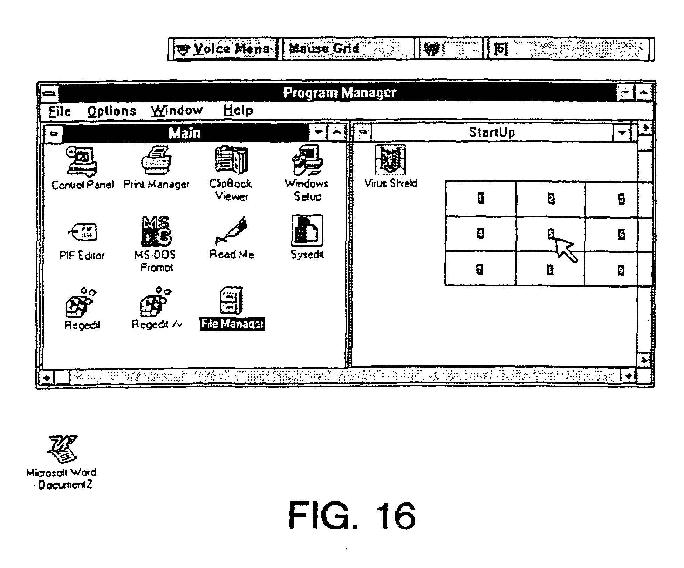

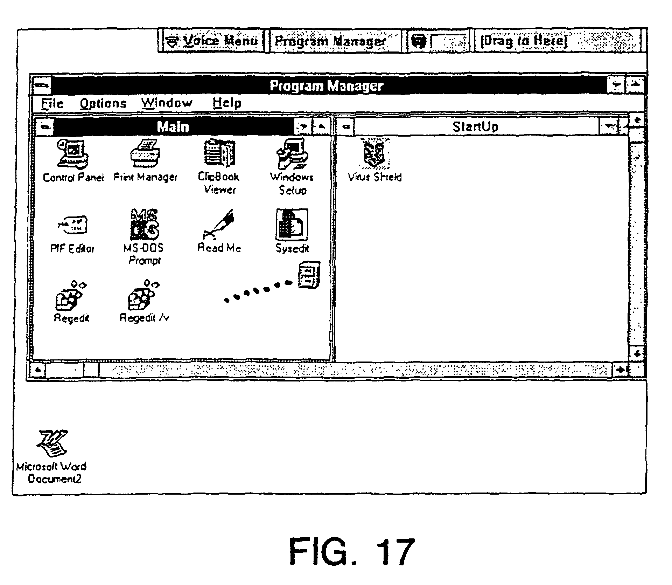

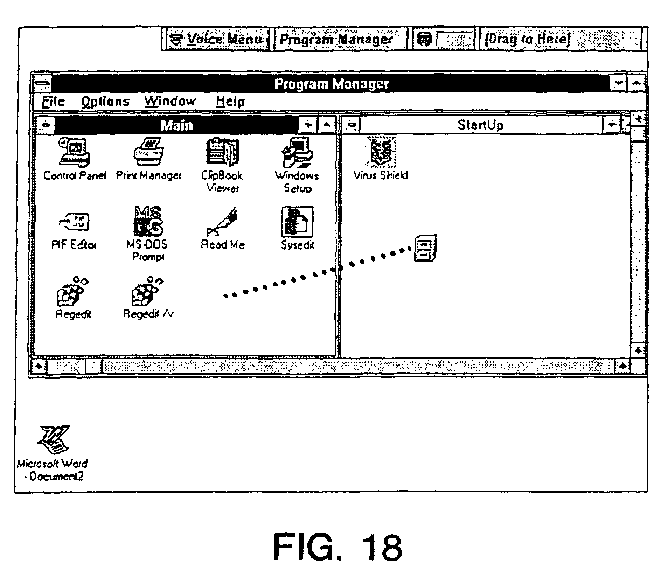

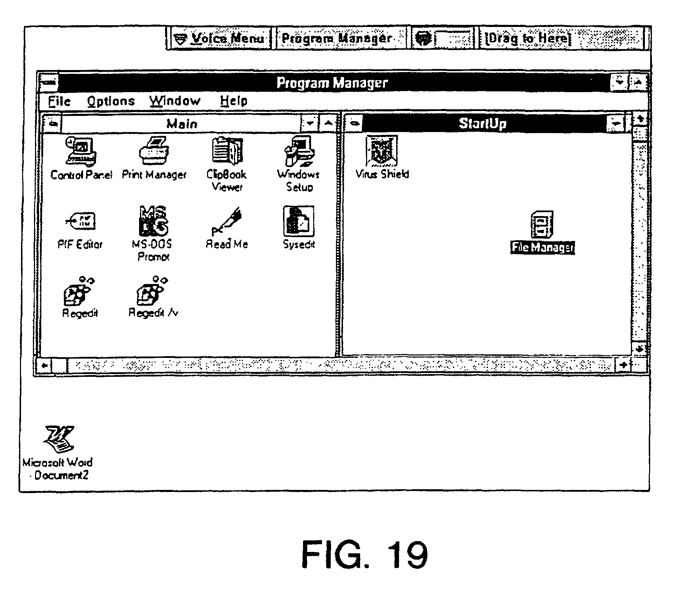

The user then uses the mouse grid (or the mouse itself, if desired)again to mark the location at which the dragging is to end, the destination, as seen in Figs. 15 and 16. Finally the user speaks a voice command, e.g., "drag to here", telling the computer to execute the dragging action, as shown in Fig. 17. The result is the dragging action shown in the sequence of Figs. 17 through 19. The activity of dragging is discontinuous from the point of view of the user (i.e., he or she gives a single command, "drag to here"). But the display shows a continuous motion of the element from its old location to the new one.

Referring again to Fig. 1B, the recognition engine provides recognized speech commands to a mouse grid process 21. When the recognized speech command is one handled by the mouse grid process, it provides corresponding instructions to the operating system (including Windows) to cause the commanded actions to occur.

A pseudo-code description of one possible implementation of the mouse grid process, suitable for use with DragonDictate, is set forth in Appendix A, and additional explanation is included in Appendix B.

### APPENDIX A

### Mouse Grid operation in PseudoCode:

### Voice interface to the Mouse Grid:

- User says "[Mouse Grid]" when the system default vocabulary is active:
   - System executes internal command: **MouseGrid** 1,0
- Or, user says "[Mouse Grid on Window]" when the system default vocabulary is active:
   - System executes internal command: **MouseGrid** 2,0
- Or, user says "[1]" vhen the MouseGrid vocabulary is active:
   - System executes internal command: **MouseGrid** 1,1
- Or, user says "[2]" when the MouseGrid vocabulary is active:
   - System executes internal command: **MouseGrid** 1,2
- or, user says "[3]" when the MouseGrid vocabulary is active:
   - system executes internal command: **MouseGrid** 1,3
... similar behavior for numbers [4] through [9] ...
- Or, user says "[Stop]" or "[Cancel]" when the MouseGrid vocabulary is active:
   - System executes internal command: **MouseGrid** 0,0
- or, user says "[Undo]" when the MouseGrid vocabulary is active:
   - system executes internal command: **MouseGrid** 1,0
- Or, user says "[Mark Here]":
   - System executes internal command: **RememberPoint**
- or, user says "[Drag to Here]":
   - system executes internal command: **DragToPoint 1**

### Execution of MouseGrid <state>, <coord> command:

- Set recognition state:
   - If **<state>** == 0 then switch active vocabulary to be the system default
   - If **<state>** ! = 1 then switch active vocabulary to be the MouseGrid vocabulary
- Display, Create or Destroy the mouse grid;
   - If **<state>** == 0 then destroy the mouse grid:
      - Delete the seventeen windows used to display the mouse grid
   - If **<state>** ! = 0 and the mouse grid does not currently exist then create the mouse grid:
      - Create the seventeen windows used to display the mouse grid (four horizontal line windows, four vertical line windows and nine number windows)
      - Initialize the grid rectangle:
         - If **<state>** == 1 then the grid rectangle is set to be the size of the screen
         - If **<state>** == 2 then the grid rectangle is set to be the size of the current active window:
            - Ask the operating system for the handle of the active window
            - Ask the operating system for the location and size of the active window
            - Set the grid rectangle to match the coordinates and size of the active window
         - Display the mouse grid (see subroutine)
- If **<state>** ! = 0 and the mouse grid already exists then move the mouse grid:
   - Compute the new location and size of the grid rectangle:
      - If **<coord>** == O make the grid rectangle equal the last saved grid rectangle:
         - If there is a saved grid rectangle location and size entry on the save stack:
            - Set the grid rectangle to the newest entry on the save stack
            - remove the newest entry from the save stack
         - If there is no saved entry on the save stack then set the grid rectangle to the size or the acreen
      - If **<coord>** ! = 0 then:
         - Save the current grid rectangle location and size on the save stack (this becomes the newest entry)
         - Compute the new horizontal size and position for the grid:
            - Proposed new horizontal size (width) of grid is one third of the current horizontal size plus four pixels
            - If the proposed new size is less then 10 pixels then set the **NoShrink** flag and make the proposed new size equal to 10 pixels
      - if **<coord>** == 1 or 4 or 7 then:
         - if the **Noshrink** flag is not set then move the left edge of the grid two pixels further left then it currently is
         - if the **NoShrink** flag is set then move the left edge of the grid three pixels further left then it currently is
         - make the right edge of the grid be equal to the left edge plus the proposed new grid width
      - if **<coord>** == 2 or 5 or 8 then:
         - make the left edge of the grid be one half of the proposed new grid width further left then the current center of the grid
         - make the right edge of the grid be equal to the left edge plus the proposed new grid width
      - if **<coord>** == 3 or 6 or 9 then:
         - if the **NoShrink** flag is not set then move the right edge of the grid two pixels further right then it currently is
         - if the **NoShrink** flag is set then move the right edge of the grid three pixels further right then it currently is
         - make the left edge of the grid be equal to the right edge minus the proposed new grid width
      - if the new left edge of the grid is more than five pixels left of the left edge of the screen, adjust the left edge of the grid to be five pixels left of the left edge of the screen
      - if the new right edge of the grid is more than five pixels right of the right edge of the screen, adjust the right edge if the grid to be five pixels right of the right edge of the screen
   - Compute the new vertical size and position for the grid (these steps are similar to computing the new horizontal position):
      - Proposed new vertical size (height) of grid is one third of the current vertical size plus four pixels
      - If the proposed new size is less then 10 pixels then set the **NoShrink** flag and make the proposed new size equal to 10 pixels
      - if **<coord>** == 1 or 2 or 3 then:
         - if the **NoShrink** flag is not set then move the top edge of the grid two pixels further up then it currently is
         - if the **NoShrink** flag is set then move the top edge of the grid three pixels further up then it currently is
         - make the bottom edge of the grid be equal to the top edge plus the proposed new grid height
         - if **<coord>** == 4 or 5 or 6 then:
            - make the top edge of the grid be one half of the proposed new grid height further up then the current center of the grid
            - make the bottom edge of the grid be equal to the top edge plus the proposed new grid height
         - if **<coord**> == 7 or 8 or 9 then:
            - if the **NoShrink** flag is not set then move the bottom edge of the grid two pixels further down then it currently is
            - if the **NoShrink** flag is set then move the bottom edge of the grid three pixels further down then it currently is
            - make the top edge of the grid be equal to the bottom edge minus the proposed new grid height
         - if the new top edge of the grid is more than five pixels higher that the top edge of the screen, adjust the top edge of the grid to be five pixels above the top edge of the screen
         - if the new bottom edge of the grid if more than five pixels below the bottom edge of the screen, adjust the bottom edge if the grid to be five pixels below the bottom edge of the screen
   - Display the mouse grid (see subroutine)

### Subroutine to display the mouse grid :

- If the horizontal size of the grid is less than 151 pixels of the vertical size of the grid is less than 151 pixels then set the **ThinLines** flag
- If the horizontal size of the grid is less than 19 pixels or, if the vertical size of the grid is less than 19 pixels then set the **NoInsideLines** flag
- Measure the size of the number window:
   - The width of the number window in large format is equal to the width of the character "8" in the default system font plus six pixels
   - The height of the number window in large format is equal to the height of the character "8" in the default system font plus six pixels
   - The width of the number window in small format is equal to the width of the character "8" in 10 point Arial font plus two pixels
   - The height of the number window in small format is equal to the height of the character "8" in 10 point Arial font plus two pixels
- If one sixth of the horizontal size of the grid is less than the width of the number window in large format or, if one sixth of the vertical size of the grid is less than the height of the number window in large format then set the **SmallNumbers** flag
- If one sixteenth of the horizontal size of the grid is less than the width of the number window in small format or, if one twelfth of the vertical size of the grid is less than the height of the number window in small format then set the **NumbersOutside** flag
- Position and draw the left-most vertical line window so that its upper-left corner is the same as the upper-left corner of the grid (see subroutine)
- Position and draw the right-most vertical line window so that its lower-right corner is the same as the lower-right corner of the grid (see subroutine)
- Position and draw the top-most horizontal line window so that its upper-left corner is the same as the upper-left corner of the grid (see subroutine)
- Position and draw the bottom-most horizontal line window so that its lower-right corner is the same as the lower-right corner of the grid (see subroutine)
- If the **NoInsideLines** flag is not set, position and draw the remaining line windows:
   - Position and draw the second to left-most vertical line window so its top is same as the top of the grid and its left edge is one third of the width of the grid further right than the left edge of the grid (see subroutine)
   - position and draw the second to right-most vertical line window so its top is same as the top of the grid and its right edge is one third of the width of the grid further left than the right edge of the grid (see subroutine)
   - Position and draw the second to top-most horizontal line window so its left edge is same as the left edge of the grid and its top is one third of the height of the grid further down than the top of the grid (see subroutine)
   - Position and draw the second to bottom-most horizontal line window so its left edge is same as the left edge of the grid and its bottom is one third of the height of the grid further right than the right edge of the grid (see subroutine)
- If the **NoInsideLines** flag is set, hide the remaining line windows:
   - Hide the second to left-most line window
   - Hide the second to right-most line window
   - Hide the second to top-most line window
   - Hide the second to bottom-most line window
- If the **NumbersOutside** flag is not set then display the number windows inside the grid:
   - Display the number ''1" window so that its center is one sixth of the width of the grid right of the left edge of the grid and one sixth of the height of the grid down from the top of the grid
   - Display the number "2" window so that its horizontal center is the same as the horizontal center of the grid right and one sixth of the height of the grid down from the top of the grid
- Display the number "3" window so that its center is one sixth of the widtn of the grid left of the right edge of the grid and one sixth of the height of the grid down from the top of the grid
- Display the number "4" window so that its center is one sixth of the width of the grid right of the left edge of the grid and its vertical canter is the same as the vertical center of the grid
- Display the number "5" window so that center (horizontal and vertical) is the same as the center of the grid
- Display the number "6" window so that its horizontal center is the same as the horizontal center of the grid right and its vertical center is the same as the vertical center of the grid
- Display the number "7" window so that its center is one sixth of the width of the grid right of the left edge of the grid and one sixth of the height of the grid up from the bottom of the grid
- Display the number "8'" window so that its center is one sixth of the width of the grid left of the right edge of the grid and one sixth of the height of the grid up from the bottom of the grid
- Display the number "9" window so that its horizontal center is the same as the horizontal center of the grid right and one sixth of the height of the grid up from the bottom of the grid
- If the **NoNumbers** flag is set then display the number windows outside the grid;
- Compute the vertical distance between the grid and number windows as follows:
   - If the **SmallNumber** flag is set then the vertical distance between the grid and number windows is equal to two-thirds of the height of a number window in large format
   - If the **SmallNumber** flag is not set then the vertical distance botween the grid and number windows is equal to two-thirds of the height of a number window in small format
- Compute the horizontal distance between the grid and number windows as follows:
   - If the **SmallNumber** flag is set then the horizontal distance between the grid and number windows is equal to the width of a number window in large format
   - If the **SmallNumber** flag is not set then the vertical distance between the grid and number windows is equal to the width of a number window in small format
- Display the number "1" window so that its center is the computed horizontal and vertical distance between the grid and number windows to the upper-left of the upper-left corner of the grid
- Display the number "2" window so that its horizontal center is the same as the horizontal center of the grid and its vertical center is the computed vertical distance between the grid and the number windows above the top of the grid
- Display the number "3" window so that its center is the computed horizontal and vertical distance between the grid and the number windows to the upper-right of the upper-right corner of the grid
- Display the number "4" window so that its vertical center is the same as the vertical center of the grid and its horizontal center is the computed horizontal distance between the grid and the number windows to the left of the left edge of the grid
- Hide the number "5" window
- Display the number "6" window so that its vertical center is the same as the vertical center of the grid and its horizontal center is the computed horizontal distance between the grid and the number windows to the right of the right edge of the grid
- Display the number "7" window so that its center is the computed horizontal and vertical distance between the grid and the number windows to the lower-left of the lover-left corner of the grid
- Display the number "8" window so that its horizontal center is the same as the horizontal center of the grid and its vertical center is the computed vertical distance between the grid and the number windows below the bottom of the grid
- Display the number "9" window so that its center is the computed horizontal and vertical distance between the grid and the number windows to the lower-right of the lover-right corner of the grid
- Move the system mouse cursor to be location in the center of the grid

### Subroutine to display a line window:

- Resize the line window:
   - If this is a horizontal line:
      - Make the width of the line window equal the width of the grid
      - If the **ThisLines** flag is not set, make the height of the line window equal three pixels
      - If the **ThisLines** flag is set, make the height of the line window equal two pixels
   - If this is a vertical line:
      - Make the height of the line window equal the height of the grid
      - If the **ThisLines** flag is not set, make the width of the line window equal three pixels
      - If the **ThisLines** flag is set, make the width of the line window equal two pixels
- Move the line window to the position indicated by the calling subroutine
   - Display the line window:
      - Display a one pixel black border on all four sides
      - If the ThisLines flag is set. display a white interior to the window

### Subroutine to display a number window:

- Resize the number window:
   - If the **SmallNumber** flag is not set, size the number window in large format:
      - Make the width of the number window equal to the width of the character "8" in the default system font plus six pixels
      - Make the height of the number window equal to the height of the character "8" in the default system font plus six pixels
   - If the **SmallNumber** flag is set, size the number window in small format:
      - make the width of the number window equal to the width of the character "8" in 10 point Arial font plus two pixels
      - The height of the number window equal to the height of the character "8" in 10 point Arial font plus two pixels
- Move the number window to the position indicated by the calling subroutine
- Display the number window:
   - Display a one pixel black border on all four sides
   - If the **SmallNumber** flag is not set:
      - Display a white interior to the window
      - Draw the number of the window in the center of the window in the default system font using a white foreground and a black background
   - If the **SmallNumber** flag is set:
      - Display a black interior to the window
      - Draw the number of the window in the center of the window in 10 point Arial font

### Execution of the RememberPoint command:

- Query the current mouse pointer location from the system
- Save the current mouse pointer location in a global variable

### Execution of the DragToPoint <buttons> command:

- Query the current mouse pointer location from the system,
- this will be the destination location
- Read the previously saved mouse cursor location from its global variable, this will be the source location
- Compute the number of movement steps and size of each step as follows:
   - Compute the maximum distance as the maximum of the horizontal distance and the vertical distance:
      - The horizontal distance is the absolute value of the difference between the horizontal component of the destination location and the horizontal component of the source location
      - The vertical distance is the absolute value of the difference between the vertical component of the destination location and the vertical component of the source location
   - The proposed number of steps is the maximum distance divided by 64 pixels
   - If the proposed number of steps is less than 2, make the proposed number of steps equal 2
   - If the proposed number of steps is greater than 10, make the proposed number of steps equal 10
   - Set the amount of horizontal movement every step to be equal to the value of the difference between the horizontal component of the destination location and the horizontal component of the source location divided by the proposed number of steps
   - Set the amount of vertical movement every step to be equal to the value of the difference between the vertical component of the destination location and the vertical component of the source location divided by the proposed number of steps
- Move the mouse cursor location to the source location
- Generate the necessary mouse button down events:
   - It the least significant bit of **<buttons>** is set then enqueue a Windows WM_LBUTTONDOWN message in the system message queue
   - If the second to least significant bit of **<buttons>** is set then enqueue a Windows WM_RBUTTONDOWN message in the system message queue
   - If the third to least significant bit of **<buttons>** is set then enqueue a Windows WM_MBUTTONDOWN message in the system message queue
- Set the number of steps remaining equal to the proposed number of steps
- Install a timer function which will execute the following code every 55 milliseconds:
   - Subtract one from the number of steps remaining
   - Compute the new location for the mouse cursor as follows:
      - The new horizontal position of the mouse cursor is the destination horizontal position minus the amount of horizontal movement every step times the number of steps remaining
      - The new vertical position of the mouse cursor is the destination vertical position minus the amount of vertical movement every step times the number of steps remaining
      - Move the mouse cursor to the computed location
      - Enqueue a Windows WM_MOUSEMOVE message with the computed location in the system message queue
   - If the number of steps remaining is zero, then:
      - Remove the timer function
      - Continue executing the operations listed below
      - Ia the number of steps remaining is not zero then wait for the next timer event
   - Generate the necessary mouse button up events:
      - If the least significant bit of **<buttons>** is set then enqueue a Windows WM_LBUTTONUP message in the system message queue
      - If the second to least significant bit of **<buttons>** is set then enqueue a Windows WM_RBUTTONUP message in the system message queue
      - If the third to least significant bit of **<buttons>** is set then enqueue a Windows WM_MBUTTONUP message in the system message queue
   - Save the destination mouse location in the global variable (as if a **Remember**Point) command was executed

### APPENDIX B

### Mouse Grid Scripting Commands

The following scripting commands were added for support of the mouse grid feature.

### MouseGrid [state [.gridbor]]

This command controls the mouse grid. The default *state* is 1 and the default *gridbor* is 0.
*State* - if *state*-0, the mouse grid will be turned off
if *state*=0, the mouse grid will be turned on or left on
   if *state*=1 and the mouse grid was not previously on the mouse grid will be turned on and will fill the whole screen
   if *state*=2 and the mouse grid was not previously on, the mouse grid will be turned on but will only fill the currently active window (unless the window is too small).
*Gridbor* - if the mouse grid is already on and *state*1=0, then this argument indicates how the mouse grid should be changes. *Gridbor*=1 through *gridbor*=9 shrink the mouse grid in the indicated direction based on the following diagram:
   1 2 3
   4 5 6
   7 8 9
   *gridbor*=0 undoes the last shrinking of the mouse grid.
   If the mouse grid gets very small, it will no longer shrink but move in the indicated direction instead.

### RememberPoint

This command records the current position of the mouse for a subsequent **DragTaPoint** command. The remembered point is reset to the upper-left corner of the screen whenever DDW in is restarted.

### DragToPoInt [buttons]

This command performs a mouse drag as follows:
1. The mouse is moved to the last point saved with the **RememberPoint** scripting command.
2. The indicated buttons are pressed and hold down.
3. The mouse is moved to the point it occupied when the **DragToP**oint command was started.
4. All mouse buttons are released.
5. The saved point is changed to be the per location of the mouse.

All shift keys which are in effect before the **DragToP**oint command is executed will be held during the mouse drag. Applications which de not support mouse dragging also will not support **DragToP**oint.

*Buttons* - specifies which buttons should be pressed and held while the drag takes effect. The values are the same as used by the **DragMouse** scripting commands:
1 = left mouse button
2 = right mouse button
4 = middle mouse botton
you can add the numbers together to press more than one button at a time.

### Mouse Grid Voice Macros

The following voice macros were added to support the Mouse Grid.

In System/Global Commands:

| | |
|---|---|
| **[Mouse Grid]** | Turns on the full screen mouse grid (**MouseGrid** 1) |
| **[Mouse Grid on Window]** | Turns on the window-size mouse grid (**MouseGrid** 2) |
| **[Mark Here]** | Remembers the current mouse position (**RememberPoint**) |
| **[Drag to Here]** | Drags the mouse using the left mouse button from the last remembered point to the current position (**DragToPoint** 1) |

In a new group called System/Mouse Grid:

| | |
|---|---|
| **[1]. [2]. ... [9]** | Shrinks the mouse grid to the indicated quadrant |
| **(MouseGrid n)** | |
| **[Upper Left]. [Up]. ... [Lower Right]** | Synonyms for [1], [2], ... [9] |
| **[Stop]** | Turns off the mouse grid (**MouseGrid** 0) |
| **[Cancel]** | Synonym for [Stop] |
| **[Button Click]** | Copy of command from System / Global Commands |
| **[Double Click]** | " |
| **[Button Double Click]** | " |
| **[Mark Here]** | " |
| **[Drag to Here]** | " |

In System/Mouse Movement:

| | |
|---|---|
| **[Mark Here]** | Copy of command from System/Global Commands |
| **[Drag to Here]** | " |

Commands are copied from System / Global Commands because in the Mouse Grid state, only commands from the System / Mouse Grid and [System / Always Active are active.

## Claims

1. A method of moving an element (34) shown on a computer display (20) toward a target position, comprising:
(a) displaying a first visual element (40) that defines subregions of the display (20);
(b) recognising a user's input identifying a subregion of the display in which the target position is located;
(c) moving the element (34) discontinuously to a location within the identified subregion without changing a position on the display (20) at which the identified subregion is displayed, and displaying a second visual element that defines sub-subregions of the identified subregion;
(d) recognising a next user's input identifying a sub-subregion of the subregion of the display (20) in which the target position is located; and,
(e) moving the element (34) discontinuously to a location within the identified sub-subregion without changing a position on the display at which the identified sub-subregion is displayed.

2. A method according to Claim 1, wherein the subregion is one of a grid (40) of possible subregions, preferably rectangular, which can be identified by the user.

3. A method according to Claim 2, wherein the grid (40) comprises rows and columns of subregions, preferably three rows and three columns.

4. A method according to Claim 2, wherein the first visual element (40) comprises the grid, preferably by being overlaid on other displayed features, and more preferably in the form of windows.

5. A method according to any one of the preceding claims, wherein the sub-subregion is one of a subgrid of possible sub-subregions, preferably rectangular, which can be identified by the user.

6. A method according to Claim 5, wherein the subgrid comprises rows and columns of subregions, preferably three rows and three columns.

7. A method according to Claim 5 or Claim 6, wherein the sub-subgrid is displayed to the user.

8. A method according to Claim 7, wherein the grid (40) is not displayed when the subgrid is being displayed.

9. A method according to any one of the preceding claims, further comprising iterating steps (d) and (e) until the user indicates that the method should be ended.

10. A method according to Claim 2 or any claim dependent thereon, wherein the grid (40) spans the entire display (20).

11. A method according to Claim 2 or any one of Claims 3 to 9 when dependent upon Claim 2, wherein the grid (40) spans a user selected portion of the display, preferably comprising a window.

12. A method according to any one of the preceding claims, wherein each subregion is associated with an index, preferably displayed.

13. A method according to Claim 12, wherein each sub-subregion is associated with an index, preferably displayed.

14. A method according to any preceding claim, wherein the subregions are marked with arbitrary labels and the user designates a subregion by saying one of the labels.

15. A method according to Claim 14, wherein the labels comprise letters of the alphabet.

16. A method according to Claim 14, wherein the labels are ABC/DEF/GHI or [top, left, top, top-right/left, centre, right/bottom-left, bottom, bottom-right].

17. A method according to any of Claims 1 to 14, wherein the user's input comprises voice commands.

18. A method according to Claim 17, wherein the voice commands include numbers used to indicate the subregion and the sub-subregion.

19. A method according to any preceding claim, further comprising recognising a user's input specifying a distance for moving the element, and moving the element the specified distance.

20. A method according to any preceding claim, further comprising using steps (a) to (e) inclusive to mark a location from which or to which dragging is to occur, and causing dragging from or to the marked location.

21. A method according to any preceding claim, further comprising after step (e), recognising a user's input indicating that the previous step should be undone, and in response, returning to step (b).

22. A method according to Claim 1, wherein the step (b) comprises recognising a user's voiced input identifying an index of a rectangular subregion of the display in which the target position is located, the subregion being one of a grid of nine possible subregions which are displayed to and may be identified by the user, and wherein the step (d) comprises recognising a next user's voiced input identifying an index of a rectangular sub-subregion of the subregion of the display in which the target position is located, the sub-subregion being from the subgrid of nine possible sub-subregions which are displayed to and can be identified by a user.

23. Apparatus for moving an element (36) shown on a computer display (20) toward a target position, comprising:
a recognition device which recognises a user's input identifying a subregion of the display (20) in which the target position is located and a next user's input identifying a sub-subregion of the subregion of the display (20) in which the target position is located;
a display controller which moves the element (36) discontinuously to a location within the identified subregion without changing a position on the display (20) at which the identified subregion is displayed, displays a visual element that defines sub-subregions of the subregion, and moves the element (36) discontinuously to a location within the identified sub-subregion without changing a position on the display at which the identified sub-subregion is displayed.

## Patentansprüche

1. Verfahren zur Bewegung eines auf einem Bildschirm (20) gezeigten Elements (34) zu einem Zielort, das Folgendes umfasst:
(a) die Darstellung eines ersten Bildelements (40), das Teilregionen der Bildschirmanzeige (20) festlegt;
(b) das Erkennen einer Eingabe durch den Benutzer, die eine Teilregion der Bildschimnanzeige, in der sich der Zielort befindet, identifiziert;
(c) die nichtkontinuierliche Bewegung des Elements (34) zu einem Ort innerhalb der identifizierten Teilregion, ohne eine Stelle auf der Bildschirmanzeige (20), an der die identifizierte Teilregion gezeigt ist, zu verändern, und die Anzeige eines zweiten Bildelements, das Unter-Teilregionen der identifizierten Teilregion festlegt;
(d) die Erkennung einer nächsten Eingabe des Benutzers, die eine Unter-Teilregion der Teilregion der Bildschirmanzeige (20), in der sich der Zielort befindet, identifiziert; und
(e) die nichtkontinuierliche Bewegung des Elements (34) zu einem Ort innerhalb der identifizierten Unter-Teilregion, ohne eine Stelle auf der Bildschirmanzeige, an der die identifizierte Unter-Teilregion gezeigt ist, zu verändern.

2. Verfahren nach Anspruch 1, bei dem die Teilregion derjenigen eines Gitters (40) von möglichen, vorzugsweise rechtwinkligen Teilregionen entspricht, die durch den Benutzer identifizierbar sind.

3. Verfahren nach Anspruch 2, bei dem das Gitter (40) Reihen und Spalten, und zwar vorzugsweise drei Reihen und drei Spalten, von Teilregionen umfasst.

4. Verfahren nach Anspruch 2, bei dem das erste Bildelement (40) das Gitter umfasst, wobei dieses vorzugsweise über weitere dargestellte Elemente gelegt wird, speziell bevorzugt in der Form von Fenstern.

5. Verfahren nach jedem der vorstehenden Ansprüche, bei dem die Unter-Teilregion einem Untergitter von möglichen, vorzugsweise rechtwinkligen Unter-Teilregionen entspricht, die durch den Benutzer identifizierbar sind.

6. Verfahren nach Anspruch 5, bei dem das Untergitter Reihen und Spalten, und zwar vorzugsweise drei Reihen und drei Spalten, von Unter-Teilregionen umfasst.

7. Verfahren nach Anspruch 5 bzw. Anspruch 6, bei dem das Untergitter dem Benutzer gezeigt wird.

8. Verfahren nach Anspruch 7, bei dem das Gitter (40) nicht gezeigt wird, wenn gerade das Untergitter gezeigt wird.

9. Verfahren nach jedem der vorstehenden Ansprüche, das weiterhin eine Wiederholung der Schritte (d) und (e) umfasst, bis der Benutzer die Beendigung des Verfahrens angibt.

10. Verfahren nach Anspruch 2 bzw. jedem darauf beruhenden Anspruch, bei dem das Gitter (40) die gesamte Bildschirmanzeige (20) überspannt.

11. Verfahren nach Anspruch 2 bzw. jedem der Ansprüche 3 bis 9, sofern dieser auf Anspruch 2 beruht, bei dem das Gitter (40) einen vom Benutzer ausgewählten Abschnitt der Bildschirmanzeige, der vorzugsweise ein Fenster umfasst, überspannt.

12. Verfahren nach jedem der vorstehenden Ansprüche, bei dem jede Teilregion mit einem Index, der vorzugsweise gezeigt wird, verbunden ist.

13. Verfahren nach Anspruch 12, bei dem jede Unter-Teilregion mit einem Index, der vorzugsweise gezeigt wird, verbunden ist.

14. Verfahren nach jedem der vorstehenden Ansprüche, bei dem die Teilregionen mit willkürlichen Bezeichnungen **gekennzeichnet** sind und der Benutzer eine Teilregion bestimmt, indem er eine der Bezeichnungen ausspricht.

15. Verfahren nach Anspruch 14, bei dem die Bezeichnungen Buchstaben des Alphabets sind.

16. Verfahren nach Anspruch 14, bei dem die Bezeichnungen ABC/DEF/GHI bzw. [oben, links, oben, oben rechts/links, Mitte, rechts/unten links, unten, unten rechts] sind.

17. Verfahren nach jedem der Ansprüche 1 bis 14, bei dem die Eingabe·durch den Benutzer Sprachbefehle umfasst.

18. Verfahren nach Anspruch 17, bei dem die Sprachbefehle Zahlen beinhalten, die zur Angabe der Teilregion und der Unter-Teilregion dienen.

19. Verfahren nach jedem der vorstehenden Ansprüche, das weiterhin das Erkennen einer Eingabe durch den Benutzer umfasst, die eine Distanz für die Bewegung des Elements nennt und das Element über die genannte Distanz bewegt.

20. Verfahren nach jedem der vorstehenden Ansprüche, das weiterhin die Nutzung der Schritte (a) bis einschließlich (e) zur Bezeichnung eines Orts umfasst, von bzw. zu dem das Ziehen erfolgen soll und die das Ziehen von bzw. zu dem bezeichneten Ort veranlasst.

21. Verfahren nach jedem der vorstehenden Ansprüche, das weiterhin im Anschluss an Schritt (e) das Erkennen einer Eingabe durch den Benutzer, die angibt, dass der vorausgegangene Schritt rückgängig gemacht werden soll, und als Reaktion darauf die Rückkehr zu Schritt (b) umfasst. .

22. Verfahren nach Anspruch 1, bei dem der Schritt (b) das Erkennen einer durch den Benutzer gesprochenen Eingabe umfasst, die einen Index einer rechtwinkligen Teilregion der Bildschirmanzeige, in der sich der Zielort befindet, identifiziert, wobei diese Teilregion einer bestimmten Region eines Gitters von neun möglichen Teilregionen entspricht, die dem Benutzer gezeigt werden und von diesem identifiziert werden können, und wobei der Schritt (d) das Erkennen einer nächsten durch den Benutzer gesprochenen Eingabe umfasst, die einen Index einer rechtwinkligen Unter-Teilregion der Bildschirmanzeige, in der sich der Zielort befindet, identifiziert, wobei diese Unter-Teilregion aus dem Untergitter von neun möglichen Unter-Teilregionen hervorgeht, die dem Benutzer gezeigt werden und von diesem identifiziert werden können.

23. Vorrichtung zum Bewegen eines auf einem Bildschirm (20) gezeigten Elements (36) zu einem Zielort, umfassend:
ein Erkennungsgerät, das die Eingabe eines Benutzers erkennt, die eine Teilregion der Bildschirmanzeige (20), in der sich der Zielort befindet, identifiziert und das eine nächste Eingabe des Benutzers erkennt, die eine Unter-Teilregion der Teilregion der Bildschirmanzeige (20), in der sich der Zielort befindet, identifiziert;
eine Anzeigesteuereinrichtung, die das Element (36) nichtkontinuierlich zu einem Ort innerhalb der identifizierten Teilregion bewegt, ohne eine Stelle auf der Bildschirmanzeige (20), an der die identifizierte Teilregion gezeigt wird, zu verändern, die ein Bildelement zeigt, das Unter-Teilregionen der Teilregion festlegt und die das Element (36) nichtkontinuierlich zu einem Ort innerhalb der identifizierten Unter-Teilregion bewegt, ohne eine Stelle auf der Bildschirmanzeige (20), an der die identifizierte Unter-Teilregion gezeigt wird, zu verändern.

## Revendications

1. Procédé de déplacement d'un élément (34) montré sur un affichage d'ordinateur (20) vers une position cible, comprenant :
(a) l'affichage d'un premier élément visuel (40) qui définit des sous-régions de l'affichage (20) ;
(b) reconnaissance d'une entrée d'utilisateur identifiant une sous-région de l'affichage dans laquelle se trouve la position de cible ;
(c) déplacement de l'élément (34) de façon discontinue à un emplacement dans la sous-région identifiée sans changer une position sur l'affichage (20) à laquelle la sous-région identifiée est affichée, et affichage d'un second élément visuel qui définit des sous-sous-régions de la sous-région identifiée ;
(d) reconnaissance de l'entrée d'utilisateur suivante identifiant une sous-sous-région de la sous-région de l'affichage (20) dans laquelle se trouve la position cible ; et,
(e) déplacement de l'élément (34) de façon discontinue à un emplacement dans la sous-sous-région identifiée sans changer une position sur l'affichage à laquelle la sous-sous-région est affichée.

2. Procédé selon la revendication 1, dans lequel la sous-région est une d'une grille (40) des sous-régions possibles, préférablement rectangulaire, qui peut être identifiée par l'utilisateur.

3. Procédé selon la revendication 2, dans lequel la grille (40) comprend des rangées et des colonnes des sous-régions, préférablement trois rangées et trois colonnes.

4. Procédé selon la revendication 2, dans lequel le premier élément visuel (40) comprend la grille, préférablement en étant superposé à d'autres caractéristiques affichées, et plus préférablement sous la forme de fenêtres.

5. Procédé selon l'une quelconque des revendications précédentes, dans lequel la sous-sous-région est une d'une sous-grille de sous-sous-régions possibles, préférablement rectangulaires qui peut être identifiée par l'utilisateur.

6. Procédé selon la revendication 5, dans lequel la sous-grille comprend des rangées et des colonnes des sous-régions, préférablement trois rangées et trois colonnes.

7. Procédé selon la revendication 5 ou la revendication 6, dans lequel la sous-sous-grille est affichée à l'utilisateur.

8. Procédé selon la revendication 7, dans lequel la grille (40) n'est pas affichée lorsque la sous-grille est affichée.

9. Procédé selon l'une quelconque des revendications précédentes, comprenant en outre des étapes d'itération (d) et (e) jusqu'à ce que l'utilisateur indique que le procédé devrait être terminé.

10. Procédé selon la revendication 2 ou l'une quelconque des revendications dépendantes de celle-ci, dans lequel la grille (40) s'étend sur l'affichage entier (20).

11. Procédé selon la revendication 2 ou l'une quelconque des revendications 3 à 9 lorsqu'elles dépendent de la revendication 2, dans lequel la grille (40) s'étend sur une partie sélectionnée par l'utilisateur de l'affichage, comprenant préférablement une fenêtre.

12. Procédé selon l'une quelconque des revendications précédentes, dans lequel chacune des sous-régions est associée à un indice, préférablement affiché.

13. Procédé selon la revendication 12, dans lequel chacune des sous-sous-régions est associée à un indice, préférablement affiché.

14. Procédé selon l'une quelconque des revendications précédentes, dans lequel les sous-régions sont marquées avec des étiquettes arbitraires et l'utilisateur désigne une sous-région en disant une des étiquettes.

15. Procédé selon la revendication 14, dans lequel les étiquettes comprennent des lettres de l'alphabet.

16. Procédé selon la revendication 14, dans lequel les étiquettes sont ABC/DEF/GHI ou [haut, gauche, haut droite/gauche, centre, droite/bas-gauche, bas, bas-droite].

17. Procédé selon l'une quelconque des revendications 1 à 14, dans lequel l'entrée d'utilisateur comprend des commandes vocales.

18. Procédé selon la revendication 17, dans lequel les commandes vocales comprennent des nombres utilisés pour indiquer la sous-région et la sous-sous-région.

19. Procédé selon l'une quelconque des revendications précédentes, comprenant en outre la reconnaissance d'une entrée d'utilisateur spécifiant une distance pour déplacer l'élément, et déplacer l'élément de la distance spécifiée.

20. Procédé selon l'une quelconque des revendications précédentes, comprenant en outre les étapes d'utilisation (a) à (e) comprises pour marquer un emplacement à partir duquel ou vers lequel le déplacement se produit, et provoquant le déplacement de et vers la position marquée.

21. Procédé selon l'une quelconque des revendications, comprenant en outre après l'étape (e), la reconnaissance d'une entrée d'utilisateur indiquant que l'étape précédente devrait être subie, et en réponse, retournée à l'étape (b).

22. Procédé selon la revendication 1, dans lequel l'étape (b) comprend la reconnaissance d'une entrée vocale d'utilisateur identifiant un indice d'une sous-région rectangulaire de l'affichage dans laquelle se trouve la position cible, la sous-région étant une d'une grille de neuf sous-régions possibles qui sont affichées et peuvent être identifiées par l'utilisateur, et dans lequel l'étape (d) comprend la reconnaissance d'une entrée vocale d'utilisateur suivant identifiant un indice d'une sous-région rectangulaire de la sous-région de l'affichage dans laquelle se trouve la position cible, la sous-région étant à partir d'une sous-grille de neuf sous-sous-régions possibles qui sont affichées et peuvent être identifiées par un utilisateur.

23. Appareil pour déplacer un élément (36) montré sur un affichage d'ordinateur (20) même une position cible, comprenant :
un dispositif de reconnaissance qui reconnaît une entrée d'utilisateur identifiant une sous-région de l'affichage (20) dans laquelle se trouve la position cible et une entrée d'utilisateur suivante identifiant une sous-sous-région de la sous-région de l'affichage (20) dans laquelle se trouve la position cible ;
un dispositif de commande d'affichage qui déplace l'élément (36) de façon discontinue à un emplacement dans la sous-région identifiée sans changer une position sur l'affichage (20) à laquelle la sous-région identifiée est affichée, affiche un élément visuel qui définit des sous-sous-régions de la sous-région, et déplace l'élément (36) de façon discontinue à un emplacement dans la sous-sous-région identifiée sans changer une position sur l'affichage auquel la sous-sous-région identifiée est affichée.
